# EUROPEAN PATENT SPECIFICATION

(11) **EP 4 512 580 B1**
(45) Date of publication and mention of the grant of the patent: **18.02.2026**
(21) Application number: 23857609.4
(22) Date of filing: 07.08.2023
(51) Int. Cl.: B25J 9/16, B25J 13/08, B25J 19/02, G01C 21/20, G05D 1/242, G05D 1/246

(54) **ROBOTIC DEVICE FOR IDENTIFYING MOVEMENT PATH USING RELIABILITY VALUES, AND METHOD FOR CONTROLLING SAME**
ROBOTERVORRICHTUNG ZUR IDENTIFIZIERUNG EINES BEWEGUNGSABLAUFS UNTER VERWENDUNG VON ZUVERLÄSSIGKEITSWERTEN UND VERFAHREN ZU DESSEN STEUERUNG
DISPOSITIF ROBOTIQUE POUR IDENTIFIER UN TRAJET DE MOUVEMENT À L'AIDE DE VALEURS DE FIABILITÉ, ET SON PROCÉDÉ DE COMMANDE

(30) Priority: 23.08.2022 KR 20220105742
(43) Date of publication of application: 26.02.2025
(73) Proprietor: Samsung Electronics Co., Ltd., Suwon-si, Gyeonggi-do 16677 (KR)
(72) Inventor: KWON, Soonbeom, Suwon-si Gyeonggi-do 16677 (KR); LEE, Jaeha, Suwon-si Gyeonggi-do 16677 (KR); CHOI, Mideum, Suwon-si Gyeonggi-do 16677 (KR); CHOI, Junyeong, Suwon-si Gyeonggi-do 16677 (KR)
(74) Representative: Gulde & Partner
(86) International application number: PCT/KR2023/011579
(87) International publication number: WO 2024/043575

(56) References cited:
- JP-A- 2014 203 144
- JP-A- 2017 188 066
- JP-A- 2020 166 702
- JP-A- 2020 166 702
- JP-A1- WO2013 002 067
- KR-A- 20110 038 962
- US-A1- 2019 080 462
- LU AUGUST DANIEL LAWRENCE ET AL: "Vision-Enhanced Lidar Odometry and Mapping", 1 January 2016 (2016-01-01), XP055831905, Retrieved from the Internet <URL:https://www.ri.cmu.edu/pub_files/2016/8/DLL-thesis.pdf> [retrieved on 20210812]
- BIN PENG ET AL: "ROLL: Long-Term Robust LiDAR-based Localization With Temporary Mapping in Changing Environments", ARXIV.ORG, CORNELL UNIVERSITY LIBRARY, 201 OLIN LIBRARY CORNELL UNIVERSITY ITHACA, NY 14853, 8 March 2022 (2022-03-08), XP091178487
- YAN XU ET AL: "Robust Self-Supervised LiDAR Odometry via Representative Structure Discovery and 3D Inherent Error Modeling", ARXIV.ORG, CORNELL UNIVERSITY LIBRARY, 201 OLIN LIBRARY CORNELL UNIVERSITY ITHACA, NY 14853, 27 February 2022 (2022-02-27), XP091165475

## Description

### [Technical Field]

The disclosure relates to a robot device and a control method thereof, and more particularly, to a robot device for identifying a movement path using a reliability value, and a control method thereof.

### [Background Art]

Various types of robot devices traveling in a space and performing a specific action have become popular, such as a serving robot replacing a person in a store, a cafe or a restaurant, a robot cleaner automatically cleaning an area to be cleaned by suctioning a foreign material while traveling on its own even without a user's separate operation, or the like.

In the related art, the robot device may obtain a map, estimate its position in the map, and move along a movement path. However, as the robot device is moved, an error between the estimated position and an actual position may be accumulated, which results in a significant deviation.

For example, the robot device may estimate that the robot device itself is positioned at an end point in the map at the end point of the movement path. However, the robot device may be actually positioned in a completely different place rather than the end point of the movement path.

That is, there has been a demand for a method of identifying a degree of the error between a position of the robot device estimated by the robot device itself and its actual position, and setting (or resetting) the movement path in consideration of the error while the robot device is moved along the movement path.

JP 2020 166702 A discloses a conventional robot device and a control method thereof.

### [Disclosure]

### [Technical Solution]

The invention is defined by the appended set of claims. The description that follows is subjected to this limitation. Any disclosure lying outside the scope of said claims is only intended for illustrative as well as comparative purposes.

According to an aspect of the disclosure, a robot device includes: at least one memory storing at least one instruction; a sensor configured to detect an environment of the robot device and output detection data; and at least one processor configured to execute the at least one instruction to: acquire a map of a space where the robot device is positioned based on the detection data received from the sensor, and a reliability value of each of a plurality of areas of the map, store the map and the reliability value of each of the plurality of areas in the at least one memory, identify at least one area having a reliability value greater than or equal to a critical value, based on the reliability value of each of the plurality of areas, and identify a movement path of the robot device in the space, based on the at least one area.

The at least one processor of the robot device is further configured to execute the at least one instruction to: estimate, based on the detection data, an area of the plurality of areas as a position of the robot device, and obtain an estimated reliability value corresponding to the estimated position of the robot device by determining a probability that the estimated position of the robot device and an actual position of the robot device match each other.

The at least one processor of the robot device is further configured to execute the at least one instruction to: acquire movement information of the robot device based on first detection data and second detection data that are consecutively received from the sensor, and estimate a new position of the robot device corresponding to the second detection data, based on the movement information.

The sensor may include a light detection and ranging (LiDAR) sensor, the first detection data may include first point cloud data received from the LiDAR sensor, the second detection data may include second point cloud data received from the LiDAR sensor, and the at least one processor of the robot device may be further configured to execute the at least one instruction to: perform an operation to combine a plurality of point clouds based on the first point cloud data and the second point cloud data, and based on a failure of the operation to combine the plurality of point clouds, obtain an updated reliability value corresponding to the new position of the robot device, wherein the updated reliability value is less than the critical value.

The sensor may include a camera, the detection data may include image data received through the camera, and the at least one processor of the robot device may be further configured to execute the at least one instruction to: identify a field of view of the camera based on the image data, and based on an angle of the field of view being less than a critical angle, obtain an updated reliability value corresponding to the new position of the robot device, wherein the updated reliability value is less than the critical value.

The at least one processor of the robot device may be further configured to execute the at least one instruction to update, in the at least one memory, the reliability value corresponding to an area of the plurality of areas, based on the acquired reliability value.

The sensor may include a light detection and ranging (LiDAR) sensor, and the at least one processor of the robot device may be further configured to execute the at least one instruction to: identify an error value based on an orientation of the LiDAR sensor in an area of the plurality of areas based on the detection data received from the LiDAR sensor, and adjust the orientation of the LiDAR sensor based on the error value while the robot device moves along the movement path in the area of the plurality of areas.

The at least one processor of the robot device may be further configured to execute the at least one instruction to: based on identifying an area of the plurality of areas having a reliability value less than the critical value, modify the movement path to bypass the identified area.

According to an aspect of the disclosure, a method of controlling a robot device includes: acquiring a map of a space where the robot device is positioned, wherein the map comprises a plurality of areas and each area of the plurality of areas has a corresponding reliability value; identifying at least one area, among the plurality of areas, having a reliability value greater than or equal to a critical value, based on the reliability value of each of the plurality of areas; and identifying a movement path of the robot device in the space, based on the at least one area.

The method of controlling the robot device further includes: estimating, based on detection data of a sensor of the robot device, an area of the plurality of areas as a position of the robot device; and obtaining an estimated reliability value corresponding to the estimated position of the robot device by determining a probability that the estimated position of the robot device and an actual position of the robot device match each other.

The estimating includes: acquiring movement information of the robot device based on first detection data and second detection data that are consecutively received from the sensor; and estimating, based on the movement information, a new position of the robot device corresponding to the second detection data.

The sensor may include a light detection and ranging (LiDAR) sensor, the first detection data may include first point cloud data received from the LiDAR sensor, the second detection data may include second point cloud data received from the LiDAR sensor, and the obtaining an estimated reliability value may include: performing an operation to combine a plurality of point clouds based on the first point cloud data and the second point cloud data; and based on a failure of the operation to combine the plurality of point clouds, obtaining an updated reliability value corresponding to the new position of the robot device, wherein the updated reliability value is less than the critical value.

### [Description of Drawings]

The above and other aspects, features, and advantages of certain embodiments of the present disclosure will be more apparent from the following description taken in conjunction with the accompanying drawings, in which:
FIG. 1 is a view for explaining a robot device according to one or more embodiments of the disclosure;
FIG. 2 is a block diagram showing a configuration of the robot device according to one or more embodiments of the disclosure;
FIG. 3 is a view for explaining a map of a space where the robot device is positioned according to one or more embodiments of the disclosure;
FIG. 4 is a view for explaining movement information of the robot device according to one or more embodiments of the disclosure;
FIG. 5 is a view for explaining a plurality of areas included in the map according to one or more embodiments of the disclosure;
FIG. 6 is a view for explaining a method of estimating a position of the robot device according to one or more embodiments of the disclosure;
FIG. 7 is a view for explaining point cloud data according to one or more embodiments of the disclosure;
FIG. 8 is a view for explaining a dynamic object according to one or more embodiments of the disclosure;
FIG. 9 is a view for explaining a field of view (FOV) according to one or more embodiments of the disclosure; and
FIG. 10 is a flowchart for explaining a control method of a robot device according to one or more embodiments of the disclosure.

### [Detailed Description of Exemplary Embodiments]

Hereinafter, the disclosure is described in detail with reference to the accompanying drawings.

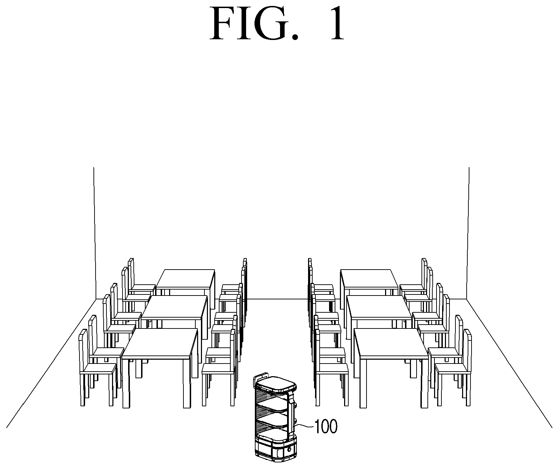

FIG. 1 is a view for explaining a robot device according to one or more embodiments of the disclosure.

As shown in FIG. 1, a robot device 100 may refer to various types of devices having ability to perform a function for itself. For example, the robot device 100 may be a smart device autonomously operated by detecting a surrounding environment of the robot device 100 in real time based on detection data of a sensor (e.g., light detection and ranging (LiDAR) sensor or camera) and collecting information in addition to performing a simple and repetitive function.

The robot device 100 according to one or more embodiments of the disclosure may include a driver including an actuator or a motor. The driver according to one or more embodiments may include a wheel, a brake, or the like, and the robot device 100 may move itself in a specific space by using the wheel, the brake, or the like, included in the driver.

The robot device 100 according to one or more embodiments may control movement (or articulation) of a robot joint by using the driver. Here, the robot joint may be one component of the robot device 100 for substituting a function of a human arm or hand.

The robot device 100 according to one or more embodiments of the disclosure may detect the surrounding environment of the robot device 100 in real time based on the detection data of the sensor. Next, the robot device 100 may control the driver based on the detected surrounding environment. For example, the robot device 100 may identify a movement path of the robot device 100 based on the detection data of the sensor.

For example, the robot device 100 may acquire a map of a space where the robot device 100 is positioned based on the detection data, and identify a position of the robot device 100 on the map. For example, the robot device 100 may identify its position in real time and move in the space along the movement path. Therefore, the robot device 100 may need to identify its position with accuracy (or with high reliability) to move in the space along the movement path.

Hereinafter, the description describes various embodiments in which the robot device 100 identifies its position on the map and identifies the movement path by considering whether the identified position matches a current position (or actual position) of the robot device 100 in the space.

The robot device 100 may be classified into a robot device for industrial, medical, household, military, or exploration use based on its field or its function which may be performed. According to one or more embodiments, the industrial robot device may be subdivided into a robot device used in a product-manufacturing process of a factory, a robot device serving a customer, receiving an order, and providing the serving, or the like in a store or a restaurant. For example, as shown in FIG. 1, the robot device 100 may be implemented as a serving robot device which may transport a service item to a position desired by a user or to a specific position in any of various places such as a restaurant, a hotel, a mart, a hospital, a clothing store, and the like.

However, this implementation is only an example, and the robot device 100 may be classified into various types based on its application field, function, and purpose of use, and is not limited to the above-described examples.

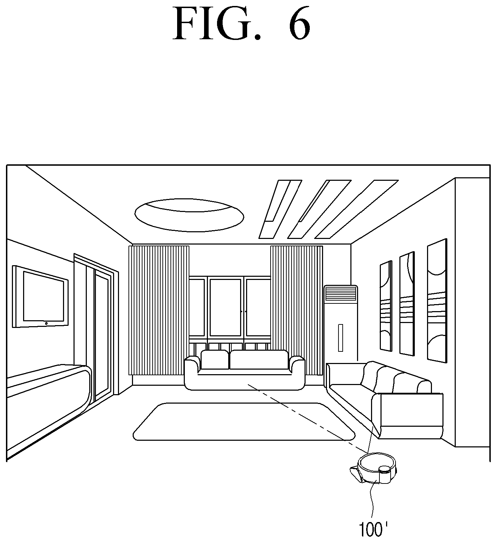

For example, as shown in FIG. 6, the robot device 100 may be implemented as a robot cleaner positioned in a house. Here, the robot cleaner may be a device driven by electric power and automatically suctioning a foreign material. Hereinafter, for convenience of explanation, it is assumed that the robot device 100 is the robot cleaner, and the robot cleaner is implemented as a flat-type in close contact with a floor to suction the foreign material on the floor. However, this implementation is only an example, and the robot device 100 may be implemented in various forms as described above.

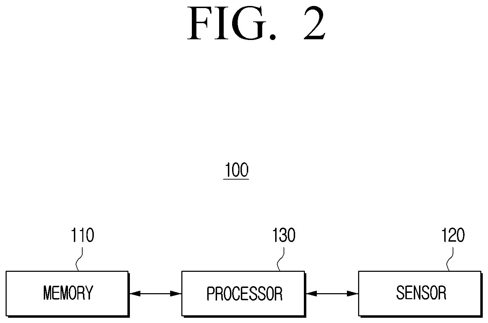

FIG. 2 is a block diagram showing a configuration of the robot device according to one or more embodiments of the disclosure.

The robot device 100 according to one or more embodiments may include a memory 110, a sensor 120, and at least one processor 130 (hereafter referred to as a processor).

The memory 110 according to one or more embodiments may store data required for various embodiments of the disclosure. The memory 110 may be implemented as a memory embedded in the robot device 100, or implemented as a memory detachable from the robot device 100, based on a data storage purpose. For example, data for driving the robot device 100 may be stored in the memory embedded in the robot device 100, and data for an extension function of the robot device 100 may be stored in the memory detachable from the robot device 100.

The memory embedded in the robot device 100 may be implemented as at least one of a volatile memory (for example, a dynamic random access memory (DRAM), a static RAM (SRAM), or a synchronous dynamic RAM (SDRAM)), a non-volatile memory (for example, an one time programmable read only memory (OTPROM), a programmable ROM (PROM), an erasable and programmable ROM (EPROM), an electrically erasable and programmable ROM (EEPROM), a mask ROM, or a flash ROM), a flash memory (for example, a NAND flash, or a NOR flash), a hard drive, or a solid state drive (SSD)). In addition, the memory detachable from the robot device 100 may be implemented in the form of a memory card (for example, a compact flash (CF), a secure digital (SD), a micro secure digital (Micro-SD), a mini secure digital (Mini-SD), an extreme digital (xD), or a multi-media card (MMC)), or an external memory (for example, a USB memory) which may be connected to a universal serial bus (USB) port.

For example, the memory 110 may store at least one instruction for controlling the robot device 100 or a computer program including the instructions.

According to one or more embodiments of the disclosure, various data may be stored in an external memory of the processor 130, some of the data may be stored in an internal memory of the processor 130, and the rest may be stored in the external memory.

In particular, the memory 110 may store the map of the space where the robot device 100 is positioned under control of the processor 130.

For example, the processor 130 may acquire the map of the space where the robot device 100 is positioned based on the detection data received from the sensor 120, and store the map in the memory 110.

Here, the sensor 120 may include the LiDAR sensor, the camera, or the like.

For example, the processor 130 may detect the surrounding environment of the robot device 100 by controlling the LiDAR sensor to emit a laser beam, and the LiDAR sensor may acquire, as the detection data, a distance to an object adjacent to the robot device 100, a direction in which the object is positioned relative to the robot device 100, and a feature of the object. Next, the processor 130 may acquire the surrounding environment of the robot device 100 as two-dimensional (2D)/three-dimensional (3D) image information (e.g., map) based on the detection data.

For example, the processor 130 may acquire image data by controlling the camera to detect the surrounding environment of the robot device 100. Here, the camera may acquire the image data by capturing the surrounding environment of the robot device 100 under the control of the processor 130, and transmit the acquired image data to the processor 130. Next, the processor 130 may analyze the image data to acquire the distance to the object adjacent to the robot device 100, the direction in which the object is positioned relative to the robot device 100, and the feature of the object, and acquire the surrounding environment of the robot device 100 as the 2D/3D image information (e.g., map).

The sensor 120 is not limited to the above example, and may include various types of sensors which may detect the surrounding environment of the robot device 100 in addition to the LiDAR sensor or the camera.

At least one processor 130 according to one or more embodiments of the disclosure may control overall operations of the robot device 100.

According to one or more embodiments of the disclosure, the processor 130 may be implemented as a digital signal processor (DSP) processing a digital signal, a microprocessor, or a time controller (TCON). However, the processor 130 is not limited thereto, and may include one or more of a central processing unit (CPU), a micro controller unit (MCU), a micro processing unit (MPU), a controller, an application processor (AP), a communication processor (CP), an advanced reduced instruction set computer (RISC) machines (ARM) processor or an artificial intelligence (AI) processor, or may be defined by this term. In addition, the processor 130 may be implemented in a system-on-chip (SoC) or a large scale integration (LSI) in which a processing algorithm is embedded, or may be implemented in the form of a field programmable gate array (FPGA). The processor 130 may perform various functions by executing computer executable instructions stored in the memory.

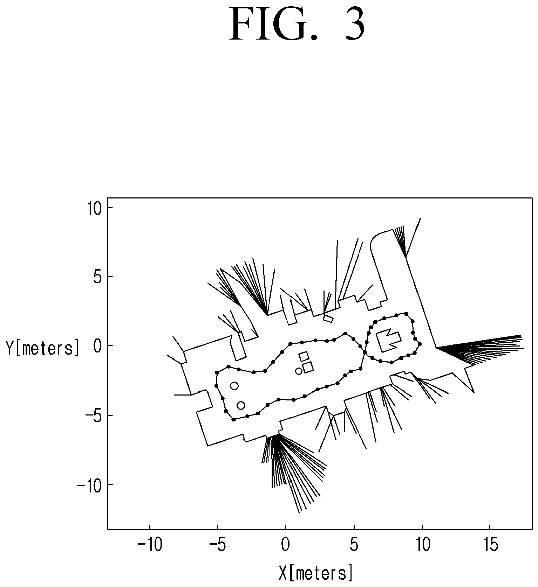

FIG. 3 is a view for explaining the map of the space where the robot device is positioned according to one or more embodiments of the disclosure.

The processor 130 according to one or more embodiments of the disclosure may acquire the map of the space where the robot device 100 is positioned by performing a simultaneous localization and mapping (SLAM) operation.

Here, the SLAM operation may be an operation of acquiring the map of the space where the robot device 100 is positioned using the detection data received from the sensor 120, and identifying the position of the robot device 100 on the map.

For example, the processor 130 may estimate the position of the robot device 100 on the map based on the detection data received from the sensor 120.

For example, the processor 130 may acquire movement information of the robot device 100 based on the first detection data and the second detection data in case of sequentially (or consecutively) receiving first detection data and second detection data.

Next, the processor 130 may estimate the position of the robot device 100 on the map at a time point at which the second detection data is received based on the movement information.

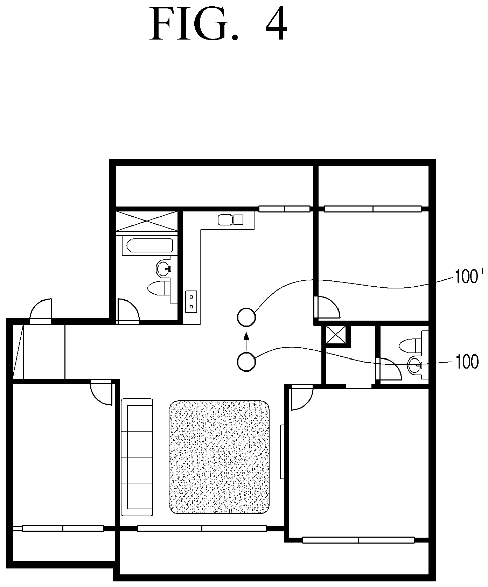

FIG. 4 is a view for explaining the movement information of the robot device according to one or more embodiments of the disclosure.

Referring to FIG. 4, the sensor 120 positioned in the robot device 100 may acquire the first detection data at a time point t, and transmit the acquired first detection data to the processor 130.

Next, the sensor 120 positioned in a robot device 100' (robot device 100' is the same as robot device 100, but shifted forward in time) may acquire the second detection data at a time point t+1, and transmit the acquired second detection data to the processor 130.

Next, the processor 130 may acquire movement information of the robot device 100 from the time point t to the time point t+1 based on the first detection data and the second detection data. The processor 130 according to one or more embodiments may estimate a position of the robot device 100' on the map at the time point t+1 based on the movement information.

For example, the sensor 120 may include the LiDAR sensor. The processor 130 may combine (register or align) point clouds to each other based on first point cloud data included in the first detection data and second point cloud data included in the second detection data, received from the LiDAR sensor.

For example, the processor 130 may combine the first point cloud data and the second point cloud data to each other by using LiDAR odometry (e.g., iterative closest point (ICP) algorithm or Normal Distributions Transform (NDT)). Next, the processor 130 may estimate the position (or a movement trajectory) of the robot device 100' based on a result of combining the first point cloud data and the second point cloud data to each other.

For example, the sensor 120 may include the camera. The processor 130 may acquire the movement information of the robot device 100 from the time point t to the time point t+1 based on first image data included in the first detection data and second image data included in the second detection data, received from the camera.

For example, the processor 130 may analyze the first image data to identify a feature of at least one object (e.g., geometric feature of at least one object) included in the first image data, and analyze the second image data to identify a feature of at least one object included in the second image data.

Next, the processor 130 may acquire the movement information of the robot device 100 from the time point t to the time point t+1 by comparing the feature of at least one object included in the first image data with the feature of at least one object included in the second image data with each other.

Next, the processor 130 may estimate the position (or a movement trajectory) of the robot device 100' based on the movement information.

Here, the sensor 120 may include at least one of the LiDAR sensor or the camera.

The processor 130 according to one or more embodiments may estimate the real-time position of the robot device 100 on the map based on the plurality of detection data received in real time or sequentially from the sensor 120 while the robot device 100 is moved in the space.

The processor 130 according to one or more embodiments may identify a probability that the estimated position of the robot device 100 on the map and its actual position in the space match each other.

For example, the processor 130 may identify whether the estimated position of the robot device 100 is reliable as its actual position, that is, the probability (hereinafter, a reliability value) that the estimated position matches its actual position.

Here, the reliability value may represent reliability for the estimated position based on the movement information, and thus be inversely proportional to a position-measurement failure value (or localization failure value (LFV)).

For example, in case that the reliability value is high, the estimated position of the robot device 100 based on the movement information may be highly likely to match its actual position, and the localization failure value may be low. On the other hand, in case that the reliability value is low, the estimated position of the robot device 100 based on the movement information may be scarcely likely to match its actual position, and the localization failure value may be high.

The processor 130 according to one or more embodiments may classify the map into the plurality of areas, and acquire and store the reliability value of each of the plurality of areas.

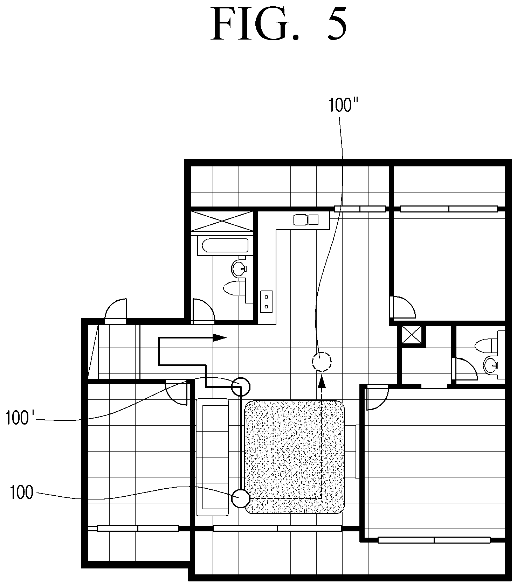

FIG. 5 is a view for explaining a plurality of areas included in the map according to one or more embodiments of the disclosure.

Referring to FIG. 5, the map may be classified into a plurality of areas. Each of the plurality of areas may be referred to as a cell, and which is hereinafter collectively referred to as an area for convenience of explanation. Meanwhile, each size of the plurality of areas shown in FIG. 5 is an example, and is not limited thereto.

The processor 130 according to one or more embodiments may estimate the real-time position of the robot device 100 based on the plurality of detection data received in real time or sequentially from the sensor 120 while the robot device 100 moves.

Next, the processor 130 may identify the reliability value, i.e. the probability that the estimated position of the robot device 100 matches its actual position, and map the identified reliability value and an area corresponding to the estimated position among the plurality of areas to each other.

Therefore, the processor 130 may identify the reliability value of each of the plurality of areas, and acquire a reliability value map (or a localization failure value (LFV) map (hereinafter referred to as the LFV Map)) corresponding to the map.

For example, the processor 130 may acquire the probability that the estimated position of the robot device 100 matches its actual position from the reliability value map in a case where the estimated position corresponds to any one of the plurality of areas of the robot device 100.

The processor 130 may need to identify an appropriate movement path in the space, and may estimate the position of the robot device on the map with accuracy (or with high reliability) to accurately move the robot device 100 along the identified movement path.

The processor 130 according to one or more embodiments may identify at least one area having a reliability value greater than or equal to a critical value based on the reliability value of each of the plurality of areas included in the reliability value map. Next, the processor 130 may identify the movement path of the robot device 100 in the space based on the identified at least one area.

For example, the processor 130 may identify one movement path in which the robot device is preferentially moved in the area having the reliability value greater than or equal to the critical value among the plurality of movement paths having the same start point and end point based on the reliability value map.

For example, the processor 130 may identify one movement path bypassing the area having the reliability value less than the critical value among the plurality of movement paths having the same start point and end point based on the reliability value map.

Next, the processor 130 may move the robot device 100 based on the identified movement path.

Hereinafter, the description describes various embodiments in which the processor 130 identifies the reliability value.

FIG. 6 is a view for explaining a method of estimating the position of the robot device according to one or more embodiments of the disclosure.

Referring to FIG. 6, the processor 130 may combine (register or align) the point clouds to each other based on the first point cloud data included in the first detection data and the second point cloud data included in the second detection data, received from the LiDAR sensor.

As shown in FIG. 6, the processor 130 may combine the point clouds with each other based on the first point cloud data and the second point cloud data, corresponding to the object (e.g., sofa) adjacent to the robot device 100.

Next, the processor 130 may acquire the movement information based on a combination result, and estimate the position of the robot device 100 on the map based on the acquired movement information.

In addition, the processor 130 may acquire the movement information of the robot device 100 from the time point t to the time point t+1 by identifying commonality/similarity between the first image data included in the first detection data received from the camera and the geometric feature of the object acquired from each of the second image data included in the second detection data. In addition, the processor 130 may estimate the position of the robot device based on the movement information.

For example, the processor 130 may identify the reliability value of the area corresponding to the estimated position among the plurality of areas as greater than or equal to the critical value.

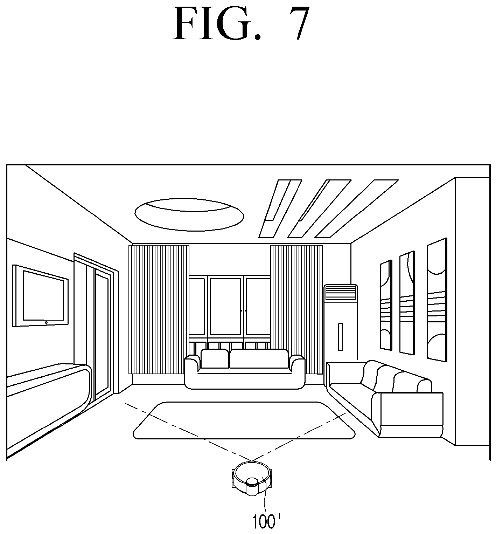

In some situations, no object may exist adjacent to the robot device 100 (or a few objects may exist adjacent to the robot device 100). In this case, the processor 130 is unable to acquire the first point cloud data and the second point cloud data, and may thus fail to combine the point clouds to each other. In this case, the processor 130 is unable to acquire the movement information based on the combination result, and may fail to estimate the position of the robot device 100 on the map. A detailed description thereof is provided with reference to FIG. 7.

FIG. 7 is a view for explaining the point cloud data according to one or more embodiments of the disclosure.

As shown in FIG. 7, in a case where a few objects exist adjacent to the robot device 100, the processor 130 may have a small number of points included in the point cloud data. Accordingly, in a case where the number of points included in the point cloud data is small, the processor 130 may identify that the reliability value of the area corresponding to the estimated position is less than the critical value.

The processor 130 according to one or more embodiments may acquire the movement information by combining the point clouds of the first point cloud data and the second point cloud data to each other, and estimate the position of the robot device 100 based on the acquired movement information. In a case where the number of points included in each of the first point cloud data and the second point cloud data is small, the processor 130 may identify that the reliability value of the area corresponding to the estimated position is less than the critical value.

In addition, in a case where each of the first point cloud data and the second point cloud data do not include any points, the processor 130 may fail to acquire the movement information and fail to estimate the position of the robot device 100 on the map.

The processor 130 may identify one movement path in which the robot device is preferentially moved through the area having the reliability value greater than or equal to the critical value among the plurality of movement paths having the same start point and end point based on the reliability value map.

For example, referring to the movement path indicated by a dotted line in FIG. 6, the movement path may include the area having a reliability value less than the critical value. Therefore, the processor 130 may identify the movement path including the movement path indicated by a solid line in FIG. 6, i.e. the area having the reliability value greater than or equal to the critical value.

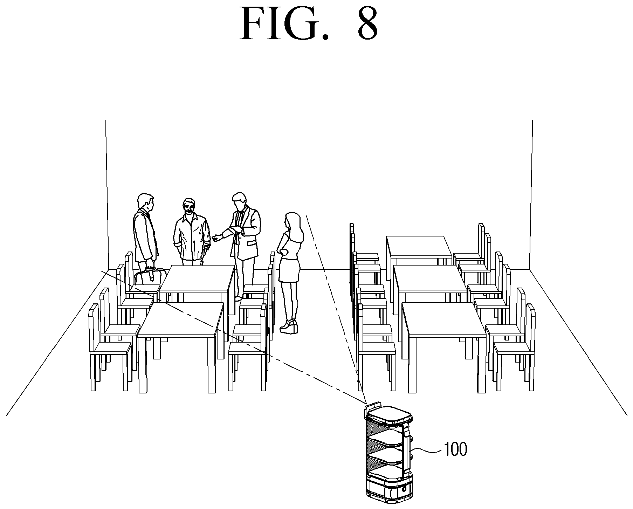

FIG. 8 is a view for explaining the dynamic object according to one or more embodiments of the disclosure.

Referring to FIG. 8, the object adjacent to the robot device 100 may be the dynamic object. In this case, the processor 130 may estimate the position of the robot device based on the point cloud data corresponding to the dynamic object, and identify that the reliability value of the area corresponding to the estimated position is less than the critical value.

For example, the processor 130 may acquire the movement information by combining the point clouds of the first point cloud data and the second point cloud data to each other, and estimate the position of the robot device 100 based on the acquired movement information. In a case where each of the first point cloud data and the second point cloud data includes a point cloud corresponding to the dynamic object, the processor 130 may identify that the reliability value of the area corresponding to the estimated position is less than the critical value.

For example, the dynamic object may be moved unlike a static object, and the movement information of the robot device 100 from the time point t to the time point t+1 may include movement of the dynamic object in addition to the movement of the robot device 100.

For example, in case of estimating the position of the robot device 100 based on the movement information, the processor 130 may estimate the position of the robot device 100 in consideration of the movement of the dynamic object in addition to the movement of the robot device 100. Therefore, an error may occur between the estimated position of the robot device 100 and its actual position. Therefore, in a case where each of the first point cloud data and the second point cloud data includes the point cloud corresponding to the dynamic object, the processor 130 may identify that the reliability value of the area corresponding to the estimated position is less than the critical value.

The sensor 120 may include the camera, and the processor 130 may identify the dynamic object based on the first image data included in the first detection data and the second image data included in the second detection data, received from the camera, and may identify that the reliability value of the area corresponding to the estimated position is less than the critical value in case of identifying the dynamic object (or identifying that the number of dynamic objects is greater than or equal to a critical number).

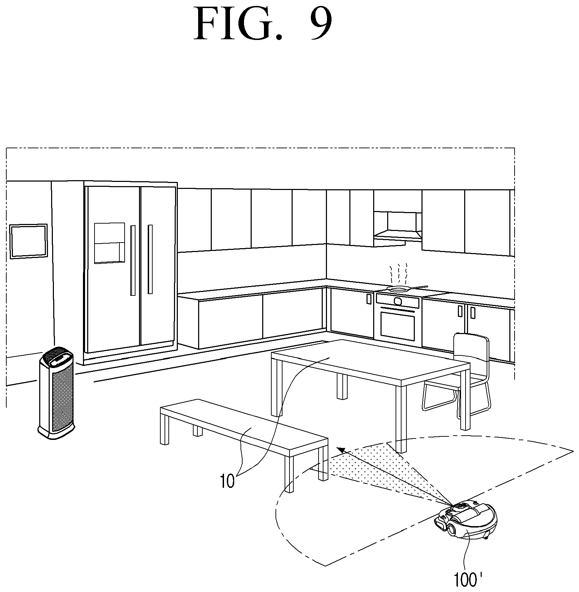

FIG. 9 is a view for explaining the field of view (FOV) according to one or more embodiments of the disclosure.

Referring to FIG. 9, the processor 130 may identify the field of view based on the detection data received from the sensor.

In a case where the identified field of view is less than the critical value, the processor 130 may identify that the reliability value of the area corresponding to the estimated position is less than the critical value.

As shown in FIG. 9, the processor 130 may identify an object (e.g., obstacle 10) positioned adjacent to a left or right direction based on a movement direction (e.g., traveling direction) of the robot device 100 based on the image data received from the camera.

Next, the processor 130 may identify the field of view of the robot device 100 based on the identified object. The processor 130 according to one or more embodiments may identify that the reliability value of the area corresponding to the estimated position from the received image data is less than the critical value in case of identifying that an angle of the field of view is less than a critical angle.

For example, in case of identifying the object positioned adjacent to the left or right direction, or the robot device 100 moved along a narrow path based on the movement direction of the robot device 100, it may be difficult for the processor 130 to identify the geometric feature of the object, the photometric feature of an object, and the like from the image data received from the camera.

For example, the processor 130 may be unable to acquire the movement information of the robot device 100 from the time point t to the time point t+1 in case of failing to identify (or having difficulty in identifying) the geometric feature of the object from each of the first image data included in the first detection data and the second image data included in the second detection data. Accordingly, the processor 130 may fail to estimate the position of the robot device 100 on the map.

In addition, the probability that the estimated position of the robot device 100 from the movement information of the robot device 100 from the time point t to the time point t+1 matches its actual position may be low in case that the processor 130 fails to identify (or having difficulty in identifying) the commonality/similarity between the geometric feature of the acquired object from each of the first image data included in the first detection data and the second image data included in the second detection data. Accordingly, the processor 130 may identify that the reliability value of the area corresponding to the estimated position is less than the critical value.

Returning to FIG. 2, the processor 130 according to one or more embodiments of the disclosure may acquire the movement information based on the number of rotations of the wheel included in the driver, a rotational speed of the wheel, or the like, in addition to the detection data received from the sensor 120.

The processor 130 according to one or more embodiments may acquire the movement information of the robot device 100 from the time point t to the time point t+1, and identify that the reliability value of the area corresponding to the estimated position is less than the critical value in case of identifying that at least one of the movement direction, movement distance, or movement speed of the robot device 100, included in the identified movement information, is impossible to be performed by the driver positioned in the robot device 100.

For example, the processor 130 may identify that the reliability value of the area corresponding to the estimated position is less than the critical value in case of identifying that the driver positioned in the robot device 100 may only be moved forward or backward, and the robot device 100 is moved to the left or right based on the movement direction of the robot device 100, included in the identified movement information.

For example, the processor 130 may identify that the reliability value of the area corresponding to the estimated position is less than the critical value in case of identifying that a maximum speed of the driver positioned in the robot device 100 is 5 m/s, and the robot device is moved at 10 m/s based on the movement distance and movement speed of the robot device 100, included in the identified movement information.

According to one or more embodiments, the processor 130 may identify the movement path based on the map and the reliability value map. In detail, the processor 130 may identify the movement path including at least one area having the reliability value greater than or equal to the critical value based on the reliability value of each of the plurality of areas included in the map.

In detail, the processor 130 may identify the movement path bypassing at least one area having the reliability value less than the critical value based on the reliability value of each of the plurality of areas included in the map.

The processor 130 may acquire the reliability value while the robot device 100 is moved along the movement path, and update the reliability value map based on the acquired reliability value.

The sensor 120 according to one or more embodiments may include the LiDAR sensor, and the processor 130 may identify an error value based on an orientation of the LiDAR sensor in any one of the plurality of areas based on the detection data received from the LiDAR sensor.

Next, the processor 130 may adjust the pose of the LiDAR sensor based on the error value while the robot device 100 is moved in one area along the movement path.

For example, the covariance value or error value of the detection data of the LiDAR sensor may depend on a direction in which the LiDAR sensor emits the laser beam at the same position.

According to one or more embodiments, the processor 130 may identify the orientation of the LiDAR sensor having a low covariance value and a low error value in a case where the robot device is moved in a specific area based on the detection data received from the LiDAR sensor.

Next, the processor 130 may adjust the orientation of the LiDAR sensor to emit the laser beam to thus have the low covariance value and the low error value rather than matching the movement direction of the robot device 100 to the orientation of the LiDAR sensor (i.e., emission direction of the laser beam), while the robot device is moved in the specific area along the movement path.

Accordingly, the movement direction of the robot device 100 and the direction in which the LiDAR sensor emits the laser beam may be the same as or different from each other.

According to various embodiments of the disclosure, the probability that the estimated position and the actual position match each other may be increased as the covariance value or the error value is decreased based on the detection data of the LiDAR sensor, and the probability that the estimated position and the actual position match each other may be increased as the number of points included in the point cloud data is increased. In addition, the probability that the estimated position and the actual position match each other may be increased as in a case where the object adjacent to the robot device 100 is not the dynamic object but the static object.

According to various embodiments of the disclosure, the probability that the estimated position and the actual position match each other may be increased as the covariance value or the error value is decreased based on the detection data of the camera, and the probability that the estimated position and the actual position match each other may be increased in case that the geometric feature of the object included in the image data or the photometric feature of the object is identified. In addition, the probability that the estimated position and the actual position match each other may be increased in a case where the object adjacent to the robot device 100 is not the dynamic object but the static object.

The processor 130 according to one or more embodiments of the disclosure may identify the movement path based on the reliability value map, thus moving the robot device 100 to be adjacent to the static object (e.g., wall, furniture, or home appliance) and by bypassing the dynamic object, in the space.

In addition, the processor 130 may identify the movement path based on the reliability value map, thus moving the robot device 100 to bypass a narrow path in the space or allowing a detection direction (e.g., pose of the LiDAR sensor) of the sensor 120 not to match the movement direction of the robot device 100 in case that the robot device is moved in the narrow path.

The robot device 100 according to one or more embodiments of the disclosure may include a communication interface. The communication interface may receive various data. For example, the communication interface may receive the various data from at least one external device positioned in the house, an external storage medium (e.g., universal serial bus (USB) memory), an external server (e.g., web hard or streaming server) or the like by using a communication method such as an access point (AP) based wireless fidelity (Wi-Fi, i.e. wireless local area network (LAN)), a Bluetooth, a Zigbee, a wired/wireless local area network (LAN), a **wide area network** (WAN), Ethernet, an IEEE 1394, a high definition multimedia interface (HDMI), a USB, a mobile high-definition link (MHL), an audio engineering society/European broadcasting union (AES/EBU) communication, an optical communication, or a coaxial communication.

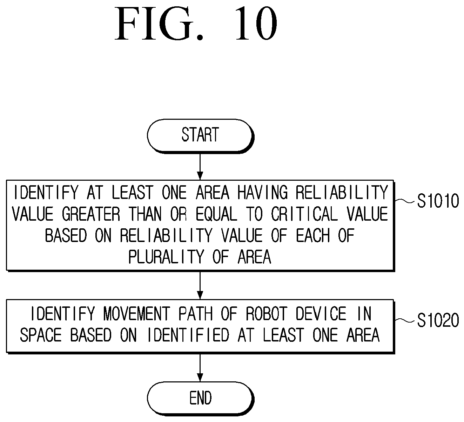

FIG. 10 is a flowchart for explaining a control method of a robot device according to one or more embodiments of the disclosure.

The control method of the robot device which includes a map of a space where the robot device is positioned and a reliability value of each of a plurality of areas included in the map according to one or more embodiments of the disclosure may first include identifying at least one area having a reliability value greater than or equal to a critical value based on the reliability value of each of the plurality of areas (S1010).

The method may then include identifying a movement path of the robot device in the space based on the identified at least one area (S 1020).

The control method according to one or more embodiments may further include: estimating any one of the plurality of areas as a position of the robot device based on detection data of a sensor included in the robot device; and acquiring, as the reliability value, a probability that the estimated position of the robot device and its actual position match each other.

Here, the estimating may include: acquiring movement information of the robot device based on first detection data and second detection data in case that the first detection data and that second detection data are consecutively received from the sensor; and estimating the position of the robot device corresponding to the second detection data based on the movement information.

Here, the acquiring of the probability may include: combining point clouds to each other based on first point cloud data included in the first detection data and second point cloud data included in the second detection data, received from a LiDAR sensor; and acquiring a reliability value less than the critical value in case that the combination fails.

The acquiring of the probability according to one or more embodiments may include: identifying a dynamic object based on first image data included in the first detection data and second image data included in second detection data, received from a camera; and acquiring a reliability value less than the critical value in case that the identified number of dynamic objects is greater than or equal to a critical number.

The acquiring of the probability according to one or more embodiments may include: identifying a field of view of the camera based on image data included in the detection data received from the camera; and acquiring the reliability value less than the critical value in case that an angle of the identified field of view is less than a critical angle.

The acquiring of the probability according to one or more embodiments may include acquiring the reliability value less than the critical value in case that at least one of the movement direction, movement distance, or movement speed of the robot device included in the movement information is identified as being impossible to be performed by the robot device.

The control method according to one or more embodiments may further include updating the reliability value of any one of the plurality of areas based on the acquired reliability value.

The control method according to one or more embodiments may further include: identifying an error value based on a pose of the LiDAR sensor in one of the plurality of areas based on the detection data received from the LiDAR sensor; and adjusting the pose of the LiDAR sensor based on the error value while the robot device is moved in one area along the movement path.

The operation S1020 of identifying the movement path according to one or more embodiments may include identifying the movement path bypassing the identified area in case that the area having the reliability value less than the critical value is identified based on the reliability value of each of the plurality of areas.

However, the various embodiments of the disclosure may be applied to all movable electronic devices as well as the robot device.

The various embodiments described above may be implemented in a computer or a computer-readable recording medium using software, hardware, or a combination of software and hardware. In some cases, the embodiments described in the specification may be implemented by the processor itself. According to a software implementation, the embodiments such as the procedures and functions described in the specification may be implemented by separate software modules. Each of the software modules may perform one or more functions and operations described in the specification.

Computer instructions for performing processing operations of the robot device according to the various embodiments of the disclosure described above may be stored in a non-transitory computer-readable medium. The computer instructions stored in the non-transitory computer-readable medium may allow a specific device to perform the processing operations of the robot device 100 according to the various embodiments described above in case that the computer instructions are executed by a processor of the specific device.

The non-transitory computer-readable medium is not a medium that stores data therein for a while, such as a register, a cache, or a memory, and indicates a medium that semi-permanently stores data therein and is readable by the machine. A specific example of the non-transitory computer-readable medium may include a compact disk (CD), a digital versatile disk (DVD), a hard disk, a Blu-ray disk, a universal serial bus (USB), a memory card, a read-only memory (ROM), or the like.

## Claims

1. A robot device (100) comprising:
at least one memory (110) storing at least one instruction;
a sensor (120) configured to detect an environment of the robot device (100) and output detection data; and
at least one processor (130) configured to execute the at least one instruction to:
acquire a map of a space where the robot device (100) is positioned based on the detection data received from the sensor (120), and a reliability value of each of a plurality of areas of the map,
store the map and the reliability value of each of the plurality of areas in the at least one memory (110),
identify (S1010) at least one area having a reliability value greater than or equal to a critical value, based on the reliability value of each of the plurality of areas, and
identify (S1020) a movement path of the robot device (100) in the space, based on the at least one area;
wherein the at least one processor (130) is further configured to execute the at least one instruction to:
estimate, based on the detection data, an area of the plurality of areas as a position of the robot device (100), and
obtain an estimated reliability value corresponding to the estimated position of the robot device (100) by determining a probability that the estimated position of the robot device (100) and an actual position of the robot device (100) match each other;
wherein the at least one processor (130) is further configured to execute the at least one instruction to:
acquire movement information of the robot device (100) based on first detection data and second detection data that are consecutively received from the sensor (120), and
estimate a new position of the robot device (100) corresponding to the second detection data, based on the movement information;
**characterized in that** the movement information comprises a movement direction of the robot device (100), a movement distance of the robot device (100), or a movement speed of the robot device (100), and
wherein the at least one processor (130) is further configured to execute the at least one instruction to:
based on identifying an inability to maintain at least one of the movement direction of the robot device (100), the movement distance of the robot device (100), and the movement speed of the robot device (100), obtain an updated reliability value corresponding to the new position of the robot device (100), wherein the updated reliability value is less than the critical value.

2. The robot device (100) of claim 1,
wherein the sensor (120) comprises a light detection and ranging, LiDAR, sensor,
wherein the first detection data comprises first point cloud data received from the LiDAR sensor and the second detection data comprises second point cloud data received from the LiDAR sensor, and
wherein the at least one processor (130) is further configured to execute the at least one instruction to:
perform an operation to combine a plurality of point clouds based on the first point cloud data and the second point cloud data, and
based on a failure of the operation to combine the plurality of point clouds, obtain an updated reliability value corresponding to the new position of the robot device (100), wherein the updated reliability value is less than the critical value.

3. The robot device (100) of claim 1, wherein the sensor (120) comprises a camera,
wherein the first detection data comprises first image data received from the camera and the second detection data comprises second image data received from the camera, and
wherein the at least one processor (130) is further configured to execute the at least one instruction to:
identify a dynamic object based on the first image data and the second image data, and
based on a number of dynamic objects being greater than or equal to a critical number, obtain an updated reliability value corresponding to the new position of the robot device (100), wherein the updated reliability value is less than the critical value.

4. The robot device (100) of claim 1, wherein the sensor (120) comprises a camera,
wherein the detection data comprises image data received through the camera, and
wherein the at least one processor (130) is further configured to execute the at least one instruction to:
identify a field of view of the camera based on the image data, and
based on an angle of the field of view being less than a critical angle, obtain an updated reliability value corresponding to the new position of the robot device (100), wherein the updated reliability value is less than the critical value.

5. The robot device (100) of claim 1, wherein the at least one processor (130) is further configured to execute the at least one instruction to update, in the at least one memory (110), the reliability value corresponding to an area of the plurality of areas, based on the acquired reliability value.

6. The robot device (100) of claim 1, wherein the sensor (120) comprises a light detection and ranging, LiDAR, sensor, and
wherein the at least one processor (130) is further configured to execute the at least one instruction to:
identify an error value based on an orientation of the LiDAR sensor in an area of the plurality of areas based on the detection data received from the LiDAR sensor, and
adjust the orientation of the LiDAR sensor based on the error value while the robot device (100) moves along the movement path in the area of the plurality of areas.

7. The robot device (100) of claim 1, wherein the at least one processor (130) is further configured to execute the at least one instruction to:
based on identifying an area of the plurality of areas having a reliability value less than the critical value, modify the movement path to bypass the identified area.

8. A method of controlling a robot device (100), the method comprising:
acquiring a map of a space where the robot device (100) is positioned, wherein the map comprises a plurality of areas and each area of the plurality of areas has a corresponding reliability value;
identifying (S1010) at least one area, among the plurality of areas, having a reliability value greater than or equal to a critical value, based on the reliability value of each of the plurality of areas; and
identifying (S1020) a movement path of the robot device (100) in the space, based on the at least one area;
further comprising:
estimating, based on detection data of a sensor (120) of the robot device (100), an area of the plurality of areas as a position of the robot device (100); and
obtaining an estimated reliability value corresponding to the estimated position of the robot device (100) by determining a probability that the estimated position of the robot device (100) and an actual position of the robot device (100) match each other;
wherein the estimating comprises:
acquiring movement information of the robot device (100) based on first detection data and second detection data that are consecutively received from the sensor (120); and
estimating, based on the movement information, a new position of the robot device (100) corresponding to the second detection data;
**characterized in that** the movement information comprises a movement direction of the robot device (100), a movement distance of the robot device (100), or a movement speed of the robot device (100), and wherein the method further comprises:
based on identifying an inability to maintain at least one of the movement direction of the robot device (100), the movement distance of the robot device (100), and the movement speed of the robot device (100), obtaining an updated reliability value corresponding to the new position of the robot device (100), wherein the updated reliability value is less than the critical value.

9. The method of claim 8, wherein the sensor (120) comprises a light detection and ranging, LiDAR, sensor,
wherein the first detection data comprises first point cloud data received from the LiDAR sensor and the second detection data comprises second point cloud data received from the LiDAR sensor, and
wherein the obtaining an estimated reliability value comprises:
performing an operation to combine a plurality of point clouds based on the first point cloud data and the second point cloud data; and
based on a failure of the operation to combine the plurality of point clouds, obtaining an updated reliability value corresponding to the new position of the robot device (100), wherein the updated reliability value is less than the critical value.

10. The method of claim 9, wherein the sensor (120) comprises a camera,
wherein the first detection data comprises first image data received from the camera and the second detection data comprises second image data received from the camera, and
wherein the obtaining the estimated reliability value comprises:
identifying a dynamic object based on the first image data and the second image data; and
based on a number of dynamic objects being greater than or equal to a critical number, obtaining an updated reliability value corresponding to the new position of the robot device (100), wherein the updated reliability value is less than the critical value.

## Patentansprüche

1. Robotervorrichtung (100), umfassend:
mindestens einen Speicher (110), der mindestens eine Anweisung speichert;
einen Sensor (120), der konfiguriert ist, eine Umgebung der Robotervorrichtung (100) zu detektieren und Detektionsdaten auszugeben; und
mindestens einen Prozessor (130) der konfiguriert ist, um die mindestens eine Anweisung auszuführen zum:
Erfassen einer Karte eines Raums, in dem die Robotervorrichtung (100) positioniert ist, basierend auf den vom Sensor (120) empfangenen Detektionsdaten und eines Zuverlässigkeitswertes für jeden einer Vielzahl von Bereichen der Karte,
Speichern der Karte und des Zuverlässigkeitswertes jedes der Vielzahl von Bereichen in dem mindestens einen Speicher (110),
Identifizieren (S1010) von mindestens einem Bereich mit einem Zuverlässigkeitswert, der größer oder gleich einem kritischen Wert ist, basierend auf dem Zuverlässigkeitswert von jedem der Vielzahl von Bereichen, und
Identifizieren (S1020) eines Bewegungspfades der Robotervorrichtung (100) in dem Raum basierend auf dem mindestens einen Bereich;
wobei der mindestens eine Prozessor (130) ferner konfiguriert ist, um die mindestens eine Anweisung auszuführen zum:
Schätzen, basierend auf den Detektionsdaten, eines Bereichs der Vielzahl von Bereichen als eine Position der Robotervorrichtung (100), und
Erhalten eines geschätzten Zuverlässigkeitswerts, der der geschätzten Position der Robotervorrichtung (100) entspricht, indem eine Wahrscheinlichkeit dafür bestimmt wird, dass die geschätzte Position der Robotervorrichtung (100) und eine tatsächliche Position der Robotervorrichtung (100) miteinander übereinstimmen;
wobei der mindestens eine Prozessor (130) ferner konfiguriert ist, um die mindestens eine Anweisung auszuführen zum:
Erfassen von Bewegungsinformationen der Robotervorrichtung (100) basierend auf ersten Detektionsdaten und zweiten Detektionsdaten, die nacheinander von dem Sensor (120) empfangen werden, und
Schätzen einer neuen Position der Robotervorrichtung (100), die den zweiten Detektionsdaten entspricht, basierend auf den Bewegungsinformationen;
**dadurch gekennzeichnet, dass** die Bewegungsinformationen eine Bewegungsrichtung der Robotervorrichtung (100), eine Bewegungsstrecke der Robotervorrichtung (100) oder eine Bewegungsgeschwindigkeit der Robotervorrichtung (100) umfassen, und
wobei der mindestens eine Prozessor (130) ferner konfiguriert ist, um die mindestens eine Anweisung auszuführen zum:
basierend auf einem Identifizieren einer Unfähigkeit, mindestens eines von der Bewegungsrichtung der Robotervorrichtung (100), der Bewegungsstrecke der Robotervorrichtung (100) und der Bewegungsgeschwindigkeit der Robotervorrichtung (100) beizubehalten, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

2. Robotervorrichtung (100) nach Anspruch 1,
wobei der Sensor (120) einen Lichtdetektions- und Entfernungsmessungs-, LiDAR, - Sensor umfasst,
wobei die ersten Detektionsdaten erste Punktwolkendaten umfassen, die von dem LiDAR-Sensor empfangen werden, und die zweiten Detektionsdaten zweite Punktwolkendaten umfassen, die von dem LiDAR-Sensor empfangen werden, und
wobei der mindestens eine Prozessor (130) ferner konfiguriert ist, um die mindestens eine Anweisung auszuführen zum:
Durchführen eines Vorgangs zum Kombinieren einer Vielzahl von Punktwolken basierend auf den ersten Punktwolkendaten und den zweiten Punktwolkendaten, und
basierend auf einem Fehlschlag des Vorgangs zum Kombinieren der Vielzahl von Punktwolken, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

3. Robotervorrichtung (100) nach Anspruch 1, wobei der Sensor (120) eine Kamera umfasst,
wobei die ersten Detektionsdaten erste Bilddaten umfassen, die von der Kamera empfangen werden, und die zweiten Detektionsdaten zweite Bilddaten umfassen, die von der Kamera empfangen werden, und
wobei der mindestens eine Prozessor (130) ferner konfiguriert ist, um die mindestens eine Anweisung auszuführen zum:
Identifizieren eines dynamischen Objekts basierend auf den ersten Bilddaten und den zweiten Bilddaten, und
basierend darauf, dass eine Anzahl von dynamischen Objekten größer oder gleich einer kritischen Anzahl ist, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

4. Robotervorrichtung (100) nach Anspruch 1, wobei der Sensor (120) eine Kamera umfasst,
wobei die Detektionsdaten Bilddaten umfassen, die durch die Kamera empfangen werden, und
wobei der mindestens eine Prozessor (130) ferner konfiguriert ist, um die mindestens eine Anweisung auszuführen zum:
Identifizieren eines Sichtfelds der Kamera basierend auf den Bilddaten, und
basierend darauf, dass ein Winkel des Sichtfeldes kleiner als ein kritischer Winkel ist, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

5. Robotervorrichtung (100) nach Anspruch 1, wobei der mindestens eine Prozessor (130) ferner konfiguriert ist, um die mindestens eine Anweisung auszuführen, um in dem mindestens einen Speicher (110) den Zuverlässigkeitswert, der einem Bereich der Vielzahl von Bereichen entspricht, basierend auf dem erfassten Zuverlässigkeitswert zu aktualisieren.

6. Robotervorrichtung (100) nach Anspruch 1, wobei der Sensor (120) einen Lichtdetektions- und Entfernungsmessungs-, LiDAR, -Sensor umfasst, und
wobei der mindestens eine Prozessor (130) ferner konfiguriert ist, um die mindestens eine Anweisung auszuführen zum:
Identifizieren eines Fehlerwerts basierend auf einer Ausrichtung des LiDAR-Sensors in einem Bereich der Vielzahl von Bereichen basierend auf von dem LiDAR-Sensor empfangenen Detektionsdaten, und
Anpassen der Ausrichtung des LiDAR-Sensors basierend auf dem Fehlerwert, während sich die Robotervorrichtung (100) entlang des Bewegungspfades in dem Bereich der Vielzahl von Bereichen bewegt.

7. Robotervorrichtung (100) nach Anspruch 1, wobei der mindestens eine Prozessor (130) ferner konfiguriert ist, um die mindestens eine Anweisung auszuführen zum:
basierend auf einem Identifizieren eines Bereichs der Vielzahl von Bereichen mit einem Zuverlässigkeitswert, der kleiner als der kritische Wert ist, Modifizieren des Bewegungspfades, um den identifizierten Bereich zu umgehen.

8. Verfahren zum Steuern einer Robotervorrichtung (100), wobei das Verfahren Folgendes umfasst:
Erfassen einer Karte eines Raums, in dem die Robotervorrichtung (100) positioniert ist, wobei die Karte eine Vielzahl von Bereichen umfasst und jeder Bereich der Vielzahl von Bereichen einen entsprechenden Zuverlässigkeitswert aufweist;
Identifizieren (S1010) von mindestens einem Bereich aus der Vielzahl von Bereichen mit einem Zuverlässigkeitswert, der größer oder gleich einem kritischen Wert ist, basierend auf dem Zuverlässigkeitswert von jedem der Vielzahl von Bereichen; und
Identifizieren (S1020) eines Bewegungspfades der Robotervorrichtung (100) in dem Raum basierend auf dem mindestens einen Bereich;
ferner umfassend:
Schätzen, basierend auf Detektionsdaten eines Sensors (120) der Robotervorrichtung (100), eines Bereichs der Vielzahl von Bereichen als eine Position der Robotervorrichtung (100); und
Erhalten eines geschätzten Zuverlässigkeitswerts, der der geschätzten Position der Robotervorrichtung (100) entspricht, indem eine Wahrscheinlichkeit dafür bestimmt wird, dass die geschätzte Position der Robotervorrichtung (100) und eine tatsächliche Position der Robotervorrichtung (100) miteinander übereinstimmen;
wobei das Schätzen Folgendes umfasst:
Erfassen von Bewegungsinformationen der Robotervorrichtung (100) basierend auf ersten Detektionsdaten und zweiten Detektionsdaten, die nacheinander von dem Sensor (120) empfangen werden; und
Schätzen, basierend auf den Bewegungsinformationen, einer neuen Position der Robotervorrichtung (100), die den zweiten Detektionsdaten entspricht;
**dadurch gekennzeichnet, dass** die Bewegungsinformationen eine Bewegungsrichtung der Robotervorrichtung (100), eine Bewegungsstrecke der Robotervorrichtung (100) oder eine Bewegungsgeschwindigkeit der Robotervorrichtung (100) umfassen, und wobei das Verfahren ferner Folgendes umfasst:
basierend auf einem Identifizieren einer Unfähigkeit, mindestens eines von der Bewegungsrichtung der Robotervorrichtung (100), der Bewegungsstrecke der Robotervorrichtung (100) und der Bewegungsgeschwindigkeit der Robotervorrichtung (100) beizubehalten, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

9. Verfahren nach Anspruch 8, wobei der Sensor (120) einen Lichtdetektions- und Entfernungsmessungs-, LiDAR, -Sensor umfasst,
wobei die ersten Detektionsdaten erste Punktwolkendaten umfassen, die von dem LiDAR-Sensor empfangen werden, und die zweiten Detektionsdaten zweite Punktwolkendaten umfassen, die von dem LiDAR-Sensor empfangen werden, und
wobei das Erhalten eines geschätzten Zuverlässigkeitswertes Folgendes umfasst:
Durchführen eines Vorgangs zum Kombinieren einer Vielzahl von Punktwolken basierend auf den ersten Punktwolkendaten und den zweiten Punktwolkendaten; und
basierend auf einem Fehlschlag des Vorgangs zum Kombinieren der Vielzahl von Punktwolken, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

10. Verfahren nach Anspruch 9, wobei der Sensor (120) eine Kamera umfasst,
wobei die ersten Detektionsdaten erste Bilddaten umfassen, die von der Kamera empfangen werden, und die zweiten Detektionsdaten zweite Bilddaten umfassen, die von der Kamera empfangen werden, und
wobei das Erhalten des geschätzten Zuverlässigkeitswertes Folgendes umfasst:
Identifizieren eines dynamischen Objekts basierend auf den ersten Bilddaten und den zweiten Bilddaten; und
basierend darauf, dass eine Anzahl von dynamischen Objekten größer oder gleich einer kritischen Anzahl ist, Erhalten eines aktualisierten Zuverlässigkeitswerts, der der neuen Position der Robotervorrichtung (100) entspricht, wobei der aktualisierte Zuverlässigkeitswert kleiner als der kritische Wert ist.

## Revendications

1. Dispositif robotique (100), comprenant :
au moins une mémoire (110) stockant au moins une instruction ;
un capteur (120) configuré pour détecter un environnement du dispositif robotique (100) et émettre des données de détection ; et
au moins un processeur (130) configuré pour exécuter l'au moins une instruction pour :
acquérir une carte d'un espace où le dispositif robotique (100) est positionné, en se basant sur les données de détection reçues du capteur (120), et une valeur de fiabilité de chacune d'une pluralité de zones de la carte,
stocker la carte et la valeur de fiabilité de chacune de la pluralité de zones dans l'au moins une mémoire (110),
identifier (S1010) au moins une zone ayant une valeur de fiabilité supérieure ou égale à une valeur critique, sur la base de la valeur de fiabilité de chacune de la pluralité de zones, et
identifier (S1020) une trajectoire de mouvement du dispositif robotique (100) dans l'espace, en se basant sur l'au moins une zone ;
dans lequel l'au moins un processeur (130) est en outre configuré pour exécuter l'au moins une instruction pour :
estimer, en se basant sur les données de détection, une zone de la pluralité de zones comme étant une position du dispositif robotique (100), et
obtenir une valeur de fiabilité estimée correspondant à la position estimée du dispositif robotique (100) en déterminant une probabilité que la position estimée du dispositif robotique (100) et une position réelle du dispositif robotique (100) correspondent l'une à l'autre ;
dans lequel l'au moins un processeur (130) est en outre configuré pour exécuter l'au moins une instruction pour :
acquérir des informations de mouvement du dispositif robotique (100) en se basant sur les premières données de détection et les secondes données de détection qui sont reçues consécutivement du capteur (120), et
estimer une nouvelle position du dispositif robotique (100) correspondant aux secondes données de détection, en se basant sur les informations de mouvement ;
**caractérisé en ce que** les informations de mouvement comprennent une direction de mouvement du dispositif robotique (100), une distance de mouvement du dispositif robotique (100) ou une vitesse de mouvement du dispositif robotique (100), et
dans lequel l'au moins un processeur (130) est en outre configuré pour exécuter l'au moins une instruction pour :
sur la base de l'identification d'une incapacité à maintenir au moins l'une de la direction de mouvement du dispositif robotique (100), de la distance de mouvement du dispositif robotique (100) et de la vitesse de mouvement du dispositif robotique (100), obtenir une valeur de fiabilité mise à jour correspondant à la nouvelle position du dispositif robotique (100), la valeur de fiabilité mise à jour étant inférieure à la valeur critique.

2. Dispositif robotique (100) de la revendication 1,
dans lequel le capteur (120) comprend un capteur de détection et de télémétrie par la lumière, LiDAR,
dans lequel les premières données de détection comprennent les premières données de nuage de points reçues du capteur LiDAR et les secondes données de détection comprennent les secondes données de nuage de points reçues du capteur LiDAR, et
dans lequel l'au moins un processeur (130) est en outre configuré pour exécuter l'au moins une instruction pour :
effectuer une opération pour combiner une pluralité de nuages de points basés sur les premières données de nuages de points et les secondes données de nuages de points, et
en se basant sur un échec de l'opération de combinaison de la pluralité de nuages de points, obtenir une valeur de fiabilité mise à jour correspondant à la nouvelle position du dispositif robotique (100), la valeur de fiabilité mise à jour étant inférieure à la valeur critique.

3. Dispositif robotique (100) de la revendication 1, dans lequel le capteur (120) comprend une caméra,
dans lequel les premières données de détection comprennent les premières données d'image reçues de la caméra et les secondes données de détection comprennent les secondes données d'image reçues de la caméra, et
dans lequel l'au moins un processeur (130) est en outre configuré pour exécuter l'au moins une instruction pour :
identifier un objet dynamique en se basant sur les premières données d'image et les secondes données d'image, et
en se basant sur un nombre d'objets dynamiques étant supérieur ou égal à un nombre critique, obtenir une valeur de fiabilité mise à jour correspondant à la nouvelle position du dispositif robotique (100), la valeur de fiabilité mise à jour étant inférieure à la valeur critique.

4. Dispositif robotique (100) de la revendication 1, dans lequel le capteur (120) comprend une caméra,
dans lequel les données de détection comprennent des données d'image reçues par la caméra, et
dans lequel l'au moins un processeur (130) est en outre configuré pour exécuter l'au moins une instruction pour :
identifier un champ de vision de la caméra en se basant sur les données d'image, et
en se basant sur un angle du champ de vision étant inférieur à un angle critique, obtenir une valeur de fiabilité mise à jour correspondant à la nouvelle position du dispositif robotique (100), la valeur de fiabilité mise à jour étant inférieure à la valeur critique.

5. Dispositif robotique (100) de la revendication 1, dans lequel l'au moins un processeur (130) est en outre configuré pour exécuter l'au moins une instruction de mise à jour, dans l'au moins une mémoire (110), de la valeur de fiabilité correspondant à une zone de la pluralité de zones, en se basant sur la valeur de fiabilité acquise.

6. Dispositif robotique (100) de la revendication 1, dans lequel le capteur (120) comprend un capteur de détection et de télémétrie par ondes lumineuses, LiDAR, et
dans lequel l'au moins un processeur (130) est en outre configuré pour exécuter l'au moins une instruction pour :
identifier une valeur d'erreur basée sur une orientation du capteur LiDAR dans une zone de la pluralité de zones sur la base des données de détection reçues du capteur LiDAR, et
ajuster l'orientation du capteur LiDAR en se basant sur la valeur d'erreur pendant que le dispositif robotique (100) se déplace le long de la trajectoire de mouvement dans la zone de la pluralité de zones.

7. Dispositif robotique (100) de la revendication 1, dans lequel l'au moins un processeur (130) est en outre configuré pour exécuter l'au moins une instruction pour :
en se basant sur l'identification d'une zone de la pluralité de zones ayant une valeur de fiabilité inférieure à la valeur critique, modifier la trajectoire de mouvement pour contourner la zone identifiée.

8. Procédé de commande d'un dispositif robotique (100), le procédé comprenant :
acquérir une carte d'un espace où le dispositif robotique (100) est positionné, la carte comprenant une pluralité de zones et chaque zone de la pluralité de zones a une valeur de fiabilité correspondante ;
identifier (S1010) au moins une zone, parmi la pluralité de zones, ayant une valeur de fiabilité supérieure ou égale à une valeur critique, sur la base de la valeur de fiabilité de chacune de la pluralité de zones ; et
identifier (S1020) une trajectoire de mouvement du dispositif robotique (100) dans l'espace, en se basant sur l'au moins une zone ;
comprenant en outre :
en se basant sur les données de détection d'un capteur (120) du dispositif robotique (100), estimer une zone de la pluralité de zones comme étant une position du dispositif robotique (100) ; et
obtenir une valeur de fiabilité estimée correspondant à la position estimée du dispositif robotique (100) en déterminant une probabilité que la position estimée du dispositif robotique (100) et une position réelle du dispositif robotique (100) correspondent l'une à l'autre ;
dans lequel l'estimation comprend :
acquérir des informations de mouvement du dispositif robotique (100) en se basant sur les premières données de détection et les secondes données de détection qui sont reçues consécutivement du capteur (120) ; et
estimer, en se basant sur les informations de mouvement, une nouvelle position du dispositif robotique (100) correspondant aux secondes données de détection ;
**caractérisé en ce que** les informations de mouvement comprennent une direction de mouvement du dispositif robotique (100), une distance de mouvement du dispositif robotique (100) ou une vitesse de mouvement du dispositif robotique (100), et dans lequel le procédé comprend en outre :
sur la base de l'identification d'une incapacité à maintenir au moins l'une de la direction de mouvement du dispositif robotique (100), de la distance de mouvement du dispositif robotique (100) et de la vitesse de mouvement du dispositif robotique (100), obtenir une valeur de fiabilité mise à jour correspondant à la nouvelle position du dispositif robotique (100), la valeur de fiabilité mise à jour étant inférieure à la valeur critique.

9. Procédé de la revendication 8, dans lequel le capteur (120) comprend un capteur de détection et de télémétrie par la lumière, LiDAR,
dans lequel les premières données de détection comprennent les premières données de nuage de points reçues du capteur LiDAR et les secondes données de détection comprennent les secondes données de nuage de points reçues du capteur LiDAR, et
dans lequel l'obtention d'une valeur de fiabilité estimée comprend :
effectuer une opération pour combiner une pluralité de nuages de points basés sur les premières données de nuages de points et les secondes données de nuages de points ; et
en se basant sur un échec de l'opération de combinaison de la pluralité de nuages de points, obtenir une valeur de fiabilité mise à jour correspondant à la nouvelle position du dispositif robotique (100), la valeur de fiabilité mise à jour étant inférieure à la valeur critique.

10. Procédé de la revendication 9, dans lequel le capteur (120) comprend une caméra,
dans lequel les premières données de détection comprennent les premières données d'image reçues de la caméra et les secondes données de détection comprennent les secondes données d'image reçues de la caméra, et
dans lequel l'obtention de la valeur de fiabilité estimée comprend :
identifier un objet dynamique en se basant sur les premières données d'image et les secondes données d'image ; et
en se basant sur un nombre d'objets dynamiques étant supérieur ou égal à un nombre critique, obtenir une valeur de fiabilité mise à jour correspondant à la nouvelle position du dispositif robotique (100), la valeur de fiabilité mise à jour étant inférieure à la valeur critique.
